# EUROPÄISCHE PATENTSCHRIFT

(11) **EP 3 628 139 B1**
(45) Veröffentlichungstag und Bekanntmachung des Hinweises auf die Patenterteilung: **09.12.2020**
(21) Anmeldenummer: 19000430.9
(22) Anmeldetag: 26.09.2019
(51) Int. Cl.: A01C 15/00, E01H 10/00, E01C 19/20

(54) **VERTEILMASCHINE MIT EINEM BEHÄLTER MIT EINER SCHWENKBAREN ABDECKUNG**
DISTRIBUTION MACHINE COMPRISING A CONTAINER WITH A PIVOTABLE COVER
MACHINE DE DISTRIBUTION DOTÉE D'UN RÉCIPIENT À COUVERCLE PIVOTANT

(30) Priorität: 26.09.2018 DE 202018004446 U
(43) Veröffentlichungstag der Anmeldung: 01.04.2020
(73) Patentinhaber: RAUCH Landmaschinenfabrik GmbH, 76547 Sinzheim (DE)
(72) Erfinder: Doll, Franz, 76547 Sinzheim (DE); Stöcklin, Volker, 77975 Ringsheim (DE)
(74) Vertreter: Lichti - Patentanwälte Partnerschaft mbB

(56) Entgegenhaltungen:
- EP-A2- 1 099 585
- DE-A1- 10 359 178
- DE-A1-102012 103 568
- DE-A1-102012 103 569
- DE-A1-102016 109 473

## Beschreibung

Die Erfindung betrifft eine Verteilmaschine, insbesondere Streu- und/oder Sämaschine, mit wenigstens einem von einem Tragrahmen getragenen Behälter zur Aufnahme von pulver- und/oder partikelförmigem Verteilgut, wenigstens einer am Boden des Behälters angeordneten Auslauföffnung, einem der Auslauföffnung nachgeordneten Dosierorgan sowie einem dem Dosierorgan nachgeordneten Verteilorgan zum Verteilen des pulver- und/oder partikelförmigen Verteilgutes auf oder in dem Boden, wobei der Behälter eine um eine Schwenkachse auf- und zu klappbare Abdeckung aufweist, welche ein Traggestänge mit einer hieran festgelegten, nachgiebigen Abdeckplane umfasst, und welche in ihrer zugeklappten Stellung den Öffnungsquerschnitt des Behälters abdeckt und in ihrer aufgeklappten Stellung zumindest einen Teil des Öffnungsquerschnittes des Behälters freigibt.

Verteilmaschinen sind einerseits in Form von landwirtschaftlichen Streumaschinen zum Ausbringen von pulver- oder partikelförmigen Verteilgut, wie insbesondere Dünger oder Saatgut, in vielfältiger Ausgestaltung bekannt, so beispielsweise in gezogener oder von einem Dreipunkt einer Zugmaschine, wie eines Traktors, aufgenommener Bauart. Derartige Verteilmaschinen umfassen einen das Verteilgut aufnehmenden Behälter, an dessen Boden üblicherweise eine oder zwei Auslauföffnungen angeordnet sind, wobei der jeweiligen Auslauföffnung ein Dosierorgan zugeordnet ist, um das auszubringende Verteilgut in der gewünschten Menge - oder genauer: mit dem gewünschten Massenstrom - dem Behälter zu entnehmen. Das Dosierorgan weist insbesondere bei Verteilmaschinen in Form von Scheibenstreuern üblicherweise einen Dosierschieber auf, welcher mittels eines geeigneten Stellorgans auf- und zusteuerbar, um je nach gewünschter Verteilungsbreite des Verteilgutes auf dem Boden, je nach Fahrgeschwindigkeit und je nach den physikalischen Eigenschaften des Verteilgutes, wie beispielsweise dessen Rieselfähigkeit, den gewünschten Massenstrom einstellen zu können. Alternativ kann das Dosierorgan zu demselben Zweck z.B. auch eine steuerbar drehangetriebenes Nocken- oder Zellenradwalze umfassen. Stromab des Dosierorgans befindet sich ein oder mehrere Verteilorgane, wie beispielsweise in Form von mit Wurfschaufeln bestückten Verteilerscheiben, mittels welchen das pulver- oder partikelförmige Verteilgut über die gewünschte Arbeitsbreite verteilt wird. Eine derartige landwirtschaftliche Verteilmaschine in Form eines Scheibendüngerstreuers ist beispielsweise aus der DE 10 2007 053 550 A1 bekannt.

Im Falle von Winterdienststreumaschinen dient der Behälter vornehmlich zur Aufnahme von in der Regel granulatförmigem Splitt, Sand und/oder Streusalz, wobei die Funktion einer solchen Winterdienststreumaschine weitestgehend der einer oben beschriebenen landwirtschaftlichen Streumaschine entspricht.

Zusätzlich zu den vorbeschriebenen Scheibenstreuern sind für landwirtschaftliche Zwecke ferner pneumatische Verteilmaschinen bekannt, wie sie beispielsweise in Form eines pneumatischen Düngerstreuers aus der DE 10 2004 030 240 A1 bekannt sind. Pneumatische Verteilmaschinen weisen in der Regel eine Mehrzahl an Dosierorganen auf, welche jeweils eine drehangetriebene Dosierwalze umfassen, an deren Dosiergehäuse sich auslassseitig wiederum mehrere, mittels Gebläse druckbeaufschlagte Übergabekammern anschließen, von welchen einzeln oder gruppenweise mehrere Förderleitungen abgehen, welche in je einem Verteilorgan münden. Letztere sind üblicherweise von Prallplatten bzw. -tellern gebildet, welche das hierauf auftreffende Verteilgut etwa fächerförmig auf dem Boden verteilen. Eine Teilbreitenschaltung ist dadurch gewährleistet, dass jedem Dosierorgan ein eigener, unabhängig voneinander drehzahlgesteuerter Motor zum Antrieb seiner jeweiligen Dosierwalze zugeordnet ist, so dass nebeneinander angeordnete Verteilorgane, welche von den jeweiligen Gruppen an Förderleitungen mit Verteilgut versorgt sind, die von einem jeweiligen Dosierorgan ausgehen, gruppenweise zu- bzw. abgeschaltet werden können.

Darüber hinaus kommen gattungsgemäße Verteilmaschinen in Form von landwirtschaftlichen Sä- oder Drillmaschinen zum Einsatz. Auch hier wird das in dem Behälter auf Vorrat gehaltene Verteilgut mittels eines üblicherweise unterhalb einer Auslauföffnung des Behälters angeordneten Dosierorgan dosiert und wird der dosierte Massenstrom an Verteilgut an eine dem Dosierorgan nachgeordnete, z.B. mittels eines Gebläses mit Druckluft beaufschlagte Förderleitung übergeben, welche den in den Druckluftstrom eindispergierten, dosierten Verteilgutstrom einem Verteilerkopf aufgibt. Der Verteilerkopf umfasst eine Mehrzahl an Abgängen, an welche sich je eine Verteilerleitung anschließt, welche dazu dient, den Verteilgutstrom in der Anzahl an Verteilerleitungen entsprechenden Teilströmen je einem Verteilorgan, z.B. in Form von Säscharen (sofern es sich bei dem Verteilgut insbesondere um Saatgut handelt), Prallplatten (sofern es sich bei dem Verteilgut insbesondere um Dünger handelt) oder dergleichen, zuzuführen, welche mit unterschiedlichem Seitenabstand von der Verteilmaschine angeordnet sind. Derartige Verteilmaschinen sind beispielsweise aus den DE 44 34 963 A1 oder DE 197 47 029 A1 bekannt.

Das auszubringende Verteilgut, welches in Pulver- oder Partikelform vorliegt, neigt im Falle eines Feuchtigkeitszutrittes in aller Regel zum Zusammenbacken oder Verklumpen, was eine einwandfreie Dosierung und Verteilung zumindest erschwert oder gar verhindert. In diesem Zusammenhang sei erwähnt, dass die meisten festen Düngemittel wie auch Streusalz einen hygroskopischen Charakter besitzen, so dass sie in Verbindung mit Luftfeuchtigkeit oder gar Regen bzw. Schnee(matsch), welche in den Behälter eindringen, agglomerieren und mit fortschreitender Feuchtigkeitsaufnahme zunehmend in mehr oder minder harten Agglomeraten den Behälterwandungen und den Dosierorganen anhaften, so dass deren Funktion beeinträchtigt wird und die vorgegebene Ausbringmenge nicht mehr eingehalten werden kann. Im Falle von Saatgut kommt hinzu, dass es bei Feuchtigkeitszutritt geschädigt und/oder es zu einer vorzeitigen Keimung eines Teils des Saatgutes kommen kann, welches besonders viel Feuchtigkeit aufgenommen hat. Schließlich sollte es auch unbedingt verhindert werden, dass mehr oder minder gesundheitlich bedenkliche und/oder für das Pflanzenwachstum schädliche Stoffe, wie Schmiermittel, Spritzwasser von der Straße etc., in das in dem Behälter auf Vorrat gehaltene Streu- oder Saatgut eingetragen werden. Entsprechendes gilt für Erdklumpen oder Steine, welche die Dosierorgane verstopfen oder gar beschädigen können.

Aus den vorgenannten Aspekten ergibt sich die Notwendigkeit, den Behälter während der Verteilarbeit sowie zumindest während der Zufahrt zur Verteilarbeit insbesondere dann abzudecken, wenn Niederschläge drohen oder der Boden aufgrund Niederschlagsresten noch feucht ist, welche in Form von Spritzwasser in den Behälter gelangen können. Zudem muss während der Zufahrt zur Verteilarbeit auf öffentlichen Straßen auch dafür Sorge getragen werden, dass kein Verteilgut aus dem Behälter herausfällt, da dies nicht nur zu einem finanziellen sowie einem Umweltschaden führt, sondern insbesondere Fahrrad- und Motorradfahrer gefährdet, welche auf den Verteilgutpartikeln Gefahr laufen ausrutschen und zu stürzen. Zur Abdeckung des Behälters bedient man sich entweder geeigneter Abdeckplanen, welche üblicherweise aus nachgiebigen Kunststoffmaterialien gefertigt sind und manuell über den Öffnungsquerschnitt des Behälters gespannt werden, was jedoch in handhabungstechnischer Hinsicht mühsam und aufwändig ist und zudem die Gefahr birgt, dass sie aufgrund (Fahrt)wind teilweise gelöst werden mit der Folge, dass Feuchtigkeit zumindest partiell in den Behälter eindringen und gegebenenfalls auch Verteilgut verloren gehen kann.

Die DE 20 2013 009 703 U1 beschreibt eine gattungsgemäße Verteilmaschine, deren Behälter eine um eine Schwenkachse auf- und zu klappbare Abdeckung aufweist, welche in ihrer zugeklappten Stellung den Öffnungsquerschnitt des Behälters abdeckt und in ihrer aufgeklappten Stellung zumindest einen Teil des Öffnungsquerschnittes des Behälters freigibt. Die Abdeckung weist ein um die Schwenkachse klappbares Traggestänge auf, an welchem die flächige Abdeckplane, z.B. in Form einer flexiblen Kunststoffplane, befestigt ist. Um zu verhindern, dass bei einer manuellen Betätigung der Abdeckung mittels einer Handhabe nach Art eines Hebels die Gefahr eines Einklemmens von Gliedmaßen des Benutzers sowie einer nicht hinreichenden Arretierung der Abdeckung im geschlossenen Zustand besteht, um ein Eindringen von Feuchtigkeit auszuschließen, schlägt die DE 20 2013 009 703 U1 eine motorische Betätigung des Traggestänges der Abdeckung mittels einer an dem Behälter oder an dessen Tragrahmen angeordneten elektromotorischen Antriebseinheit vor.

In der DE 10 2016 109 473 A1 geht es um eine weitere landwirtschaftliche Verteilmaschine, wie beispielsweise in Form einer Streu- oder Sämaschine, deren Behälter mit einer um eine Schwenkachse auf- und zu klappbaren Abdeckung ausgestattet ist, welche einen Rahmen mit einer nachgiebigen Abdeckplane oder -folie umfasst. Die Abdeckplane bzw. -folie ist an einem klappbaren Rahmenteil des Rahmens gespannt, welches mit einem auf die obere Stirnseite des Behälters aufgesetzten, stationären Rahmenteil zusammenwirkt, wobei die Abdeckplane bzw. -folie mittels eines sich in Umfangsrichtung des stationären Rahmenteils erstreckenden Reißverschlusses verschlossen werden kann.

Schließlich sei in Bezug auf den Stand der Technik der Vollständigkeit halber noch auf nicht gattungsgemäße Kippmulden- und andere Baustellenfahrzeuge verwiesen, deren nach oben offene Kippmulde eine auf einer Wickelrolle aufgewickelte, motorisch ein- und ausrollbare Abdeckplane besitzt, welche an zwei parallelen Schienen an der Oberseite der Kippmulde geführt ist. Derartige Abdeckplanen sind für gattungsgemäße Verteilmaschinen allerdings nur bedingt geeignet, da sich das Verteilgut in den Wicklungen akkumulieren und verklumpen kann, so dass es beim Öffnen/Schließen der Abdeckplane in den Behälter hineinfällt und das "neue" Verteilgut mit nicht sortenreinen und zudem verunreinigten sowie oft feuchten, durch das Einklemmen zwischen den aufgerollten Lagen der Abdeckplane komprimierten und harten Klumpen verunreinigt wird, was es aus den oben genannten Gründen zu vermeiden gilt.

Die Veröffentlichung DE 10 2012 103569 A1 offenbart eine Verteilmaschine mit einer Behälterabdeckplane nach dem Oberbegriff des Anspruchs 1.

Der Erfindung liegt die Aufgabe zugrunde, die klappbare Abdeckung einer Verteilmaschine der eingangs genannten Art auf einfache und kostengünstige Weise dahingehend weiterzubilden, dass unabhängig von der Betätigung der Abdeckung - sei sie manuell oder sei sie motorisch - unter zumindest weitestgehender Vermeidung der vorgenannten Nachteile eine zuverlässige Abdichtung des Behälters gegenüber der Umgebung sichergestellt ist.

Erfindungsgemäß wird diese Aufgabe bei einer Verteilmaschine der eingangs genannten Art dadurch gelöst, dass die Abdeckplane an zumindest einer Seite des Behälters mittels wenigstens einer Dichtungsleiste im oberen Randbereich des Behälters lösbar befestigt ist, wobei der Querschnitt der Dichtungsleiste
- einen ersten Schenkel, welcher sich im Wesentlichen parallel zur Außenseite des Behälters erstreckt, dessen innere Seite an der Außenseite des Behälters anliegt und an dessen äußeren Seite die Abdeckplane befestigt ist, und
- einen zweiten Schenkel, welcher die obere Stirnseite des Behälters übergreift und sich in Richtung des Inneren des Behälters erstreckt, und/oder einen dritten Schenkel, welcher sich von dem Behälter fort nach oben erstreckt, aufweist.

Die erfindungsgemäße Ausgestaltung sorgt jedenfalls an der zumindest einen Seite des Behälters, an welcher die von dem klappbaren Traggestänge getragene Abdeckplane während der Überführung zwischen der zu- und aufgeklappten Stellung der Abdeckung nicht bewegt wird (d.h. an derjenigen Seite des Behälters, von welcher die Abdeckung beim Hin- und Herklappen angehoben und abgesenkt wird, entgegengesetzten Seite) für eine absolut dichte Anordnung der Abdeckplane an dem Behälter, wobei die Betätigung der Abdeckung manuell oder motorisch erfolgen kann. Die Dichtungsleiste stellt dabei aufgrund ihrer Erstreckung etwa parallel zur Außenseite des Behälters die Dichtigkeit sowohl gegenüber einem Eindringen von Schmutzpartikeln als auch von Feuchtigkeit sicher und dient zur lösbaren, aber gleichwohl dichten Befestigung der Abdeckplane an dem Behälter. Darüber hinaus kann die Abdeckplane infolge ihrer durchgehenden, vorzugsweise lösbaren (siehe hierzu weiter unten), Befestigung an der Dichtungsleiste gespannt werden, um zu verhindern, dass sich aufgrund von Wölbungen oder Knicken der nachgiebigen Abdeckplane Undichtigkeiten ergeben, wie es bei einer nur punktuellen Befestigung der Abdeckplane an dem Behälter mittels Schrauben, Bolzen, Haken oder dergleichen der Fall wäre.

Im Hinblick auf die konstruktive Ausgestaltung der Dichtungsleiste sieht die Erfindung vor, dass der Querschnitt der Dichtungsleiste einen ersten Schenkel aufweist, welcher sich im Wesentlichen parallel zur Außenseite des Behälters erstreckt, dessen innere Seite an der Außenseite des Behälters anliegt und an dessen äußeren Seite die Abdeckplane, vorzugsweise lösbar, befestigt ist. Der erste Schenkel der im oberen Randbereich des Behälters festgelegten Dichtungsleiste stellt dabei die Dichtigkeit sowohl gegenüber dem Behälter als auch gegenüber der hieran vorzugsweise lösbar befestigten Abdeckplane sicher, welche - wie nachstehend noch näher erläutert - z.B. mittels eines Klett- oder Reißverschlusses an der Außenseite des ersten Schenkels der Dichtungsleiste lösbar befestigt sein kann.

Im Hinblick auf die konstruktive Ausgestaltung der Dichtungsleiste ist darüber hinaus vorgesehen, dass der Querschnitt der Dichtungsleiste einen zweiten Schenkel aufweist, welcher die obere Stirnseite des Behälters übergreift und sich in Richtung des Inneren des Behälters erstreckt. Der zweite Schenkel der Dichtungsleiste vermag gleichfalls zu einer hohen Dichtigkeit zwischen dem Behälter und der Dichtungsleiste beizutragen, indem er insbesondere verhindert, dass Verteilgut aus dem Innern des Behälters zwischen die Dichtungsleiste und die Behälterwand eindringen kann. Darüber hinaus bietet der zweite Schenkel der Dichtungsleiste in Kombination mit deren erstem Schenkel eine einwandfreie Stabilität unter Gewährleistung einer einfachen und selbstzentrierenden Montage der Dichtungsleiste an dem Behälter, indem er sich auf der oberen Stirnseite des Behälters abstützt und dabei den ersten Schenkel von parallel zur Behälterwand einwirkenden Kräften entlastet.

Alternativ oder insbesondere zusätzlich zu dem zweiten Schenkel der Dichtungsleiste ist vorgesehen, dass der Querschnitt der Dichtungsleiste einen dritten Schenkel aufweist, welcher sich von dem Behälter fort nach oben erstreckt. Der folglich von dem oberen Rand des Behälters nach oben vorstehende dritte Schenkel der Dichtungsleiste bietet auch bei einem praktisch gänzlich mit Verteilgut befüllten Behälter einen wirksamen Schutz vor einem etwaigen Herausfallen von Verteilgut aus dem Behälter und verhindert, dass Verteilgut vom Behälterinneren in den Verbindungsbereich der Dichtungsleiste, wie insbesondere deren erstem Schenkel, mit der Abdeckplane gelangen kann. Dies erweist sich vor allem bei häufig auftretenden, abrupten Abbremsungen der Verteilmaschine während der Verteilarbeit oder auch während ihres Transportes als sehr vorteilhaft, wenn die Dichtungsleiste zumindest an der - in Fahrtrichtung betrachtet - vorderen Seite des Behälters der Verteilmaschine angeordnet ist.

Die Abdeckplane sollte vorzugsweise zumindest an der - in Fahrtrichtung betrachtet - vorderen Seite des Behälters mittels der Dichtungsleiste im oberen Randbereich des Behälters lösbar befestigt sein, da die der Fahrtrichtung zugewandte Seite des Behälters den äußeren Einwirkungen von Schmutz (wie z.B. Bodenpartikeln, Steinen, Staub und dergleichen) und Feuchtigkeit (wie z.B. Niederschlagswasser), welche von einer die Verteilmaschine tragenden Zugmaschine, wie einem Traktor, oder auch von einer achsgestützten Verteilmaschine selbst aufgewirbelt werden, in besonderem Maße exponiert ist. Die Schwenkachse der Abdeckung erstreckt sich in diesem Fall etwa parallel zu der vorderen Seite des Behälters. Bei der - in Fahrtrichtung betrachtet - vorderen Seite des Behälters handelt es sich bei üblichen Verteilmaschinen in der Regel um eine der Längsseiten des Behälters, wobei es im Falle einer Verteilmaschine mit einem mit seinen Längsseiten parallel zur Fahrtrichtung angeordneten Behälter je nach Anordnung der Schwenkachse selbstverständlich auch möglich ist, die Dichtungsleiste zumindest an der - in Fahrtrichtung betrachtet - vorderen Querseite des Behälters (sofern sich die Schwenkachse der Abdeckung gleichfalls quer zur Fahrtrichtung erstreckt) oder zumindest an einer der seitlichen Längsseiten anzuordnen (sofern sich die Schwenkachse der Abdeckung in Fahrtrichtung erstreckt). Darüber hinaus kann zwecks Abdichtung des Behälters nicht nur an wenigstens einer Seite desselben selbstverständlich vorgesehen sein, dass die Abdeckplane sowohl an der wenigstens einen Seite des Behälters als auch an je einem, dieser Seite zugewandten Abschnitt der an diese angrenzenden Seiten des Behälters mittels derselben oder weiteren Dichtungsleiste(n) im oberen Randbereich des Behälters lösbar befestigt ist. Die Dichtungsleiste(n) kann bzw. können sich folglich im Wesentlichen U-förmig entlang dem oberen Randbereich des Behälters bis etwa zur Schwenkachse der Abdeckung erstrecken, so dass die Abdeckplane im Wesentlichen U-förmig entlang ihres dem Behälter zugewandten Umfangsrandes, an welchem sie während der Überführung zwischen ihrer zu- und aufgeklappten Stellung nicht bewegt wird, mittels der Dichtungsleiste dicht, aber lösbar an dem Behälter befestigt ist.

In vorteilhafter Ausgestaltung kann vorgesehen sein, dass die Dichtungsleiste im oberen Randbereich der zumindest einen Seite des Behälters festgelegt ist, wobei die Abdeckplane lösbar an der Dichtungsleiste befestigt ist. Die Dichtungsleiste kann dabei, wie weiter unten erwähnt, entweder fest oder auch ihrerseits lösbar an dem Behälter montiert sein. Stattdessen ist es auch denkbar, dass die Dichtungsleiste im Randbereich der Abdeckplane festgelegt ist, wobei die Dichtungsleiste mit der Abdeckplane lösbar im oberen Randbereich des Behälters befestigt ist. Auch in diesem Fall kann die Dichtungsleiste fest oder auch ihrerseits lösbar an der Abdeckplane montiert sein.

Zum Zwecke einer hohen Dichtigkeit der lösbaren Verbindung zwischen der (z.B. fest am Behälter montierten) Dichtungsleiste und der Abdeckplane oder zwischen der (z.B. fest an der Abdeckplane montierten) Dichtungsleiste und dem oberen Randbereich des Behälters bei einer zugleich einfachen Montage und Demontage der Abdeckplane kann vorzugsweise vorgesehen sein, dass
- die Abdeckplane mittels eines Klettverschlusses oder eines Reißverschlusses an der an dem Behälter festgelegten Dichtungsleiste lösbar befestigt ist; oder
- die Dichtungsleiste mit der hieran festgelegten Abdeckplane mittels eines Klettverschlusses oder eines Reißverschlusses lösbar an dem Behälter befestigt ist.

Im erstgenannten Fall kann beispielsweise auf die äußere Seite der Dichtungsleiste die Hakenseite (oder die Flauschseite) des Klettverschlusses aufgebracht, z.B. aufgeklebt, sein kann, während auf einen randseitigen Bereich der Abdeckplane die Flauschseite (oder die Hakenseite) des Klettverschlusses aufgebracht, z.B. ebenfalls aufgeklebt, sein kann. Im letztgenannten Fall kann beispielsweise auf die innere Seite der Dichtungsleiste die Hakenseite (oder die Flauschseite) des Klettverschlusses aufgebracht, z.B. aufgeklebt, sein kann, während auf den oberen Randbereich des Behälters die Flauschseite (oder die Hakenseite) des Klettverschlusses aufgebracht, z.B. ebenfalls aufgeklebt, ist. Darüber hinaus sind grundsätzlich beliebige andere bekannte lösbare Verbindungen zwischen der Dichtungsleiste und der Abdeckplane bzw. zwischen der Dichtungsleiste und dem Behälter denkbar, welche für die notwendige Dichtigkeit sorgen, wie z.B. Reißverschlüsse oder dergleichen.

Der erste Schenkel der Dichtungsleiste kann, wie bereits erwähnt, vorzugsweise lösbar an der Außenseite des Behälters festgelegt sein, was grundsätzlich in beliebiger Weise geschehen kann, sofern die Befestigung die Anforderungen an die Dichtigkeit gegen Schmutz und Feuchtigkeit erfüllt. So kann der ersten Schenkel der Dichtungsleiste z.B., gegebenenfalls unter Zwischenanordnung einer, vorzugsweise elastischen, Dichtung, beispielsweise aus Gummi, Silikon oder dergleichen, an dem oberen Randbereich des Behälters lösbar festgelegt, z.B. verschraubt, vernietet etc. sein. Eine besonders einfache und kostengünstige Ausgestaltung kann überdies vorsehen, dass der erste Schenkel der Dichtungsleiste mit dem Behälter verklebt ist, wie insbesondere mittels eines beidseitig klebenden Klebebandes, sofern zwischen der Dichtungsleiste und der Abdeckplane eine lösbare Verbindung gegeben ist, wie z.B. eine solche der oben genannten Art.

Um für eine einfache Montage und Demontage der Abdeckplane an den bzw. von dem Behälter mittels der Dichtungsleiste zu sorgen und zugleich zu verhindern, dass die lösbare Verbindung zwischen der Abdeckplane und der Dichtungsleiste oder zwischen letzterer und dem Behälter herumfliegenden Schmutzpartikeln direkt exponiert ist, kann die Abdeckplane ferner vorteilhafterweise die Dichtungsleiste nach unten übergreifen, so dass die Dichtungsleiste im montierten Zustand der Abdeckplane nicht sichtbar ist.

In diesem Fall kann ferner vorgesehen sein, dass der die Dichtungsleiste nach unten übergreifende Abschnitt der Abdeckplane unter Bildung von wenigstens zwei Lagen umgefaltet ist, wobei zwischen den beiden Lagen der Abdeckplane insbesondere eine sich im Wesentlichen parallel zu der Dichtungsleiste erstreckende Griffstange eingebracht ist. Der nach unten über die Dichtungsleiste vorstehende Randbereich der Abdeckplane weist aufgrund der mit der Umfaltung verbundenen Aufdoppelung eine erhöhte Stabilität gegen Beschädigungen, wie Risse oder dergleichen, sowie auch gegen eine etwaige Faltenbildung auf. Die in die hierdurch gebildeten Schlaufe, indem der Außenrand der Abdeckplane z.B. mit einem randparallelen Abschnitt derselben vernäht ist, eingebrachte Griffstange erleichtert das manuelle Ergreifen des Randes der Abdeckplane, z.B. zu deren Reinigung, Montage und Demontage, und verleiht dem Randbereich der Abdeckplane eine zusätzliche Stabilität und Steifigkeit, so dass sie gespannt bleiben kann und keine Falten bildet, welche zu Undichtigkeiten führen könnten.

Der zweite Schenkel der Dichtungsleiste kann vorzugsweise gleichfalls - alternativ oder zusätzlich zu dem ersten Schenkel - an der oberen Stirnseite des Behälters, insbesondere mittels eines beidseitig klebenden Klebebandes, lösbar festgelegt sein, wobei freilich auch hier grundsätzlich die oben in Bezug auf die Befestigung des ersten Schenkels der Dichtungsleiste an dem Behälter erwähnten Befestigungsarten denkbar sind.

Der dritte Schenkel der Dichtungsleiste kann sich vorzugsweise im Wesentlichen schräg sowohl nach oben als auch nach außen von dem Behälter fort erstrecken. Auf diese Weise wird von der Innenseite des Behälters gegen den dritten Schenkel der Dichtungsleiste, z.B. anlässlich eines Bremsvorgangs der Verteilmaschine, auftreffendes Verteilgut an der Innenseite des dritten Schenkels der Dichtungsleiste zurückgehalten und von diesem abgebremst und in den Behälter zurück geleitet. Sofern die Dichtungsleiste sowohl mit dem ersten als auch mit dem zweiten und dritten Schenkel ausgestattet ist, kann es sich hierbei als vorteilhaft erweisen, wenn sich der dritte Schenkel der Dichtungsleiste von dem Verbindungsbereich ihres ersten Schenkels mit dem zweiten Schenkel von dem Behälter fort nach oben erstreckt. In diesem Zusammenhang hat es sich ferner als günstig erwiesen, wenn zwischen dem zweiten Schenkel und dem dritten Schenkel der Dichtungsleiste ein gegenüber der maximalen Dicke der Dichtungsleiste größerer Radius angeordnet ist. Ein solcher großer Radius verhindert, dass Verteilgutpartikel auf der Dichtungsleiste liegen bleiben, wenn Verteilgutpartikel aus dem Innern des Behälters, z.B. während eines Bremsvorgangs der Verteilmaschine, auf die Innenseite des dritten Schenkels auftreffen.

Um für eine dauerhafte und sichere Befestigung der Abdeckplane auch unter einer gewissen Vorspannung derselben zu sorgen, so dass sie im Wesentlichen keine Senken bildet, in welchen sich Niederschlagswasser akkumulieren kann, kann vorgesehen sein, dass eine innere Lage der Abdeckplane zumindest an der einen Seite des Behälters ferner an einer sich im Wesentlichen parallel zu der Dichtungsleiste und oberhalb derselben erstreckenden ersten Tragstrebe des Traggestänges, z.B. im Wesentlichen in Form eines Rohres oder Stabes, festgelegt ist, während die äußere Lage der Abdeckplane in der vorstehend beschriebenen Weise mittels der Dichtungsleiste an dem Behälter befestigt ist. Letztere Verbindung wird auf diese Weise auch entlastet und muss insbesondere keine nennenswerten Zugkräfte aufnehmen, wenn die Abdeckplane aus den obigen Gründen unter einer gewissen Vorspannung von dem Traggestänge getragen sein soll. Die erste Tragstrebe des Traggestänges kann zu diesem Zweck z.B. in einer endseitigen Schlaufe der inneren Lage der Abdeckplane aufgenommen sein, welche wiederum beispielsweise durch Umnähen des endständigen Abschnittes der inneren Lage der Abdeckplane gebildet sein kann.

Darüber hinaus kann vorteilhafterweise vorgesehen sein, dass die Abdeckplane an wenigstens einer, der wenigstens einen Dichtungsleiste entgegengesetzten Seite des Behälters an einer sich im Wesentlichen parallel zu dieser Seite des Behälters und oberhalb derselben erstreckenden zweiten Tragstrebe des Traggestänges festgelegt ist. Auf diese Weise kann die Abdeckplane unter einer gewissen Vorspannung zwischen der ersten Tragstrebe, welche sich etwa parallel zu der wenigstens einen Dichtungsleiste erstreckt, und der zweiten Tragstrebe gespannt werden, welche sich gleichfalls etwa parallel zu der Dichtungsleiste erstreckt, aber an der dieser entgegengesetzten Seite des Behälters angeordnet ist, an welcher die von dem klappbaren Traggestänge getragene Abdeckplane während der Überführung zwischen der zu- und aufgeklappten Stellung der Abdeckung nach oben und unten bewegt wird. Zudem ergibt sich hierdurch auch eine Stabilisierung der nachgiebigen Abdeckplane zumindest an der der Dichtungsleiste entgegengesetzten Seite gegen eine Falten- oder gar Rissbildung.

Die Abdeckplane kann hierbei grundsätzlich in beliebiger Weise, z.B. mittels Schrauben, Bolzen, Nieten oder dergleichen, an der zweiten Tragstrebe festgelegt sein, wobei alternativ oder zusätzlich beispielsweise auch eine Befestigung derselben an der zweiten Tragstrebe in einer ihrer Befestigung an der ersten Tragstrebe etwa entsprechenden Weise denkbar ist, indem eine innere Lage der Abdeckplane mittels einer Schlaufe von der zweiten Tragstrebe durchgriffen ist. Um auch an der der wenigstens einen Dichtungsleiste entgegengesetzten Seite des Behälters (also an derjenigen, z.B. in Fahrtrichtung rückwärtigen Seite, an welcher die von dem klappbaren Traggestänge getragene Abdeckplane während der Überführung zwischen der zu- und aufgeklappten Stellung der Abdeckung nach oben und unten bewegt wird) für eine sehr hohe Dichtigkeit der Abdeckplane zu sorgen, kann die Abdeckplane in ihrer den Querschnitt des Behälters abdeckenden, zugeklappten Stellung vorzugsweise sowohl die zweite Tragstrebe als auch den unterhalb derselben angeordneten, oberen Randbereich des Behälters nach unten übergreifen.

Darüber hinaus kann die Abdeckplane an ihrer wenigstens einen, der wenigstens einen Dichtungsleiste entgegengesetzten Seite des Behälters (also wiederum an derjenigen, z.B. in Fahrtrichtung rückwärtigen Seite, an welcher die von dem klappbaren Traggestänge getragene Abdeckplane während der Überführung zwischen der zu- und aufgeklappten Stellung der Abdeckung nach oben und unten bewegt wird) mit einer Mehrzahl an Abstandhaltern ausgestattet sein, welche unter Freihaltung eines zwischen der oberen Stirnseite des Behälters und dem die Abdeckplane tragenden Traggestänge angeordneten Spaltes zum Abstützen der Abdeckplane auf dem oberen Randbereich des Behälters dienen. Die Abstandhalter bieten dabei einerseits insbesondere dann, wenn die Abdeckplane manuell betätigbar ist, aufgrund des gebildeten Spaltes einen zuverlässigen Schutz des Benutzers vor einem Einklemmen seiner Finger zwischen der Abdeckplane und dem oberen Randbereich des Behälters, andererseits dienen die Abstandhalter als Widerlager der Abdeckplane, indem sie in deren zugeklappten Zustand auf dem oberen Randbereich des Behälters zur Abstützung gelangen.

Die Abstandhalter können dabei beispielsweise aus einem Elastomermaterial, insbesondere aus der Gruppe Gummi und Silikon, gefertigt und/oder hiermit beschichtet sein. Darüber hinaus können die Abstandhalter vorzugsweise zumindest im Bereich der äußeren Kanten des Behälters angeordnet sein, wobei sie z.B. ferner als Verbindungsstücke von Tragelementen des Traggestänges dienen können. Die Abdeckplane kann ferner z.B. unter Zwischenanordnung der Abstandhalter mittels Schrauben oder Bolzen an der zweiten Tragstrebe festgelegt sein, so dass zur Befestigung der Abstandhalter keine zusätzlichen Befestigungsmittel vonnöten sind.

Wie bereits angedeutet, kann es im Hinblick auf einen einwandfreien Abfluss von Niederschlagswasser von Vorteil sein, wenn die Abdeckplane in ihrer den Querschnitt des Behälters abdeckenden, zugeklappten Stellung im Wesentlichen dachförmig ausgestaltet ist, indem sie über eine zentrale dritte Tragstrebe des Traggestänges, welche sich im Wesentlichen parallel zu der Dichtungsleiste und oberhalb derselben erstreckt, gespannt ist. Die dritte Tragstrebe des Traggestänges kann sich dabei insbesondere etwa parallel zu der ersten und zu der zweiten Tragstrebe und auch zu der Schwenkachse des Traggestänges sowie - wenn sich die Abdeckplane in ihrer zugeklappten Stellung befindet - oberhalb der ersten und zweiten Tragstrebe und zwischen denselben erstrecken.

In diesem Zusammenhang kann ferner vorgesehen sein, dass zwischen der ersten Tragstrebe und der dritten Tragstrebe und/oder zwischen der zweiten Tragstrebe und der dritten Tragstrebe Bänder, insbesondere aus elastischen Materialien, gespannt sind, um die Abdeckplane in der aufgeklappten Stellung der Abdeckung kompakt zu halten und/oder um sie in der zugeklappten Stellung der Abdeckung abzustützen. Die Abdeckplane, welche folglich die erste, zweite und dritte Tragstrebe überspannt, ist auf diese Weise aufgrund der zwischen den Tragstreben gespannten Bändern in der zugeklappten Stellung daran gehindert, sich nach unten in Richtung des Behälters durchzubiegen und Senken zu bilden, in welchen sich Niederschlagswasser ansammeln kann. Darüber hinaus wird die Abdeckplane insbesondere in der aufgeklappten Stellung der Abdeckung mittels der Bänder kompakt gehalten, um zu verhindern, dass sich zusammengefaltete Abschnitte der Abdeckplane über den Behälterrand hinaus oder insbesondere in den geöffneten Behälterquerschnitt hinein erstrecken. Letzteres wäre hinderlich, da während des Befüllens des Behälters oder bei befülltem Behälter Verteilgut zwischen abstehende Abschnitte der Abdeckplane oder zwischen diese und die Behälterwand gelangen könnte, was zu einer höheren Betätigungskraft zum Zuklappen der Abdeckplane führte und die Gefahr bürge, dass Verteilgut aus dem Behälter heraus befördert werden könnte.

Zur, insbesondere lösbaren, Befestigung der Bänder können an der ersten Tragstrebe und/oder an der zweiten Tragstrebe beispielsweise Halteösen angeordnet, z.B. an diesen verschraubt, sein, an welchen die Bänder, insbesondere mittels hieran befestigter Haken, gespannt sind. Entsprechende Halteösen können zu demselben Zweck auch an der zentralen dritten Tragstrebe vorgesehen sein, oder die dritte Tragstrebe durchgreift wenigstens eine, insbesondere wenigstens zwei, Hülse(n), welche zweckmäßigerweise mit Spiel auf die dritte Tragstrebe aufgebracht ist bzw. sind und durch welche die Bänder hindurchgeführt sind.

Wie ebenfalls bereits angedeutet, kann das Traggestänge der Abdeckung mittels eines exzentrisch zu deren Schwenkachse an dem Traggestänge angeordneten Hebels manuell zwischen deren zugeklappten Stellung und deren aufgeklappten Stellung hin und her bewegbar sein, wobei der Hebel vorzugsweise mit einer Handhabe, wie einem Handgriff oder dergleichen, ausgestattet sein kann. Ferner kann der Hebel bzw. dessen Handhabe vorteilhafterweise in der zugeklappten Stellung der Abdeckung an dem Traggestänge der Abdeckung und/oder an dem Behälter arretierbar sein, um ein unzeitiges Lösen, z.B. bei starkem Wind oder starken Vibrationen der Verteilmaschine, sowie ein hieraus resultierendes, teilweises Aufklappen der Abdeckung zu verhindern.

Alternativ oder zusätzlich kann das Traggestänge der Abdeckung selbstverständlich motorisch, insbesondere mittels einer an dem Behälter oder an dessen Tragrahmen festgelegten elektromotorischen Antriebseinheit, zwischen deren zugeklappten Stellung und deren aufgeklappten Stellung betätigt sein. Bei einem solchen motorischen Antrieb kann es sich vorteilhafterweise um jenen der eingangs zitierten DE 20 2013 009 703 U1 handeln, welche hiermit zum Gegenstand der vorliegenden Offenbarung gemacht wird.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht des mit einer Ausführungsform einer klappbaren Abdeckung versehenen Oberteils eines Behälters einer im Übrigen nicht dargestellten Verteilmaschine, wobei lediglich das Traggestänge der Abdeckung gezeigt ist, während eine hiervon getragene, nachgiebige Abdeckplane aus Veranschaulichungsgründen weggelassen worden ist;
- Fig. 2: eine schematische perspektivische Detailansicht eines sich in Querrichtung des Behälters gemäß Fig. 1 erstreckenden Abschnittes des klappbaren Traggestänges der Abdeckung einschließlich eines zu deren Betätigung dienenden Hebels;
- Fig. 3: eine schematische perspektivische Schnittansicht des Hebels des Traggestänges gemäß Fig. 2 zur Veranschaulichung einer Arretierung des Hebels in der geschlossenen Stellung der Abdeckung;
- Fig. 4: eine schematische perspektivische Schnittansicht des oberen Randbereiches des Behälters gemäß Fig. 1 an einer Seite desselben, welche mit einer zur Befestigung der Abdeckplane an dem Behälter dienenden Dichtungsleiste versehen ist;
- Fig. 5: eine schematische Querschnittsansicht des mit der Dichtungsleiste gemäß Fig. 3 versehenen oberen Randbereiches des Behälters entlang der Schnittebene V-V der Fig. 1;
- Fig. 6: eine weitere schematische Querschnittsansicht des mit der Dichtungsleiste gemäß Fig. 3 und 4 versehenen oberen Randbereichs des Behälters entlang der Schnittebene VI-VI der Fig. 3 und insoweit im Wesentlichen entsprechend der Schnittebene der Fig. 4;
- Fig. 7: eine schematische Querschnittsansicht des oberen Randbereiches des Behälters gemäß Fig. 1 entlang der Schnittebene VII-VII der Fig. 1, d.h. an einer Seite des Behälters, welche entgegengesetzt zu jener gemäß Fig. 4 bis 6 angeordnet ist, welche mit der zur Befestigung der Abdeckplane an dem Behälter dienenden Dichtungsleiste versehen ist; und
- Fig. 8: eine schematische perspektivische Detailansicht des oberen Randbereiches des Behälters gemäß Fig. 7, an welchem die Abdeckplane mittels hieran befestigter Abstandhalter im zugeklappten Zustand unter Bildung eines Spaltes auf dem oberen Behälterrand abgestützt ist.

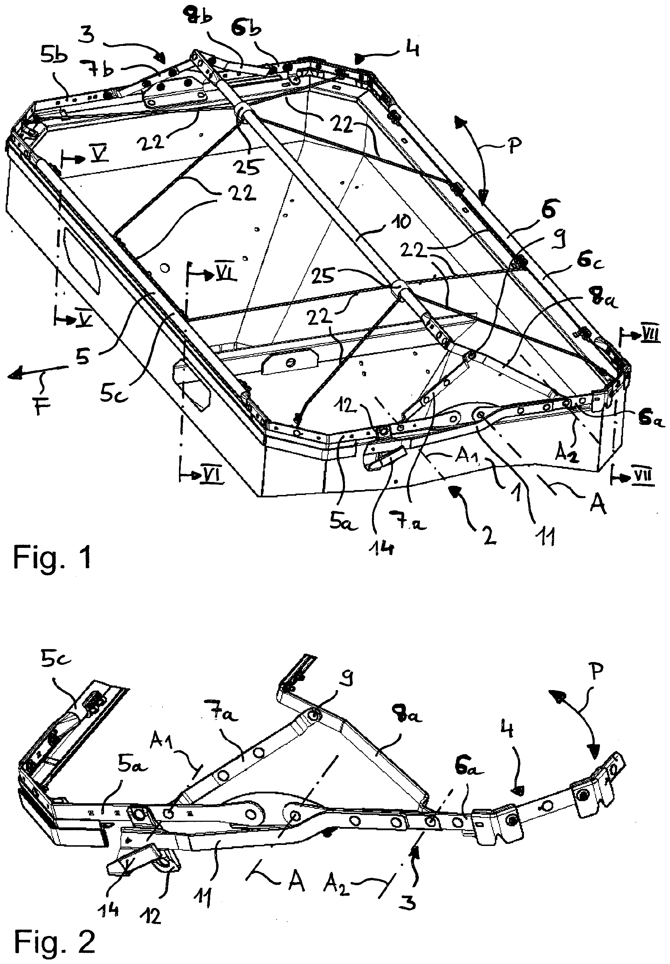

In der Fig. 1 ist der obere Randbereich 1 eines ansonsten nicht gänzlich gezeigten Behälters 2 zur Aufnahme von pulver- bzw. partikelförmigem Verteilgut, wie beispielsweise Dünger oder Saatgut, einer gleichfalls nicht dargestellten Verteilmaschine dargestellt, bei welcher es sich um eine übliche landwirtschaftliche Streu- oder Sämaschine oder auch um eine Winterdienststreumaschine handeln kann. Der Behälter 2 weist im vorliegenden Fall einen etwa rechteckigen Querschnitt mit abgeschrägten Ecken auf, kann aber selbstverständlich auch andere Formen besitzen, wie beispielsweise mehr oder minder genau rechteckig sein. Am oberen Randbereich 1 des Behälters 2 ist eine klappbare Abdeckung 3 montiert, welche um eine etwa horizontale Achse A, welche etwa parallel zu den entgegengesetzten Längsseiten des Behälters 2 und im Wesentlichen mittig zu denselben angeordnet ist, in Richtung des Pfeils P auf und zu klappbar ist. In der in Fig. 1 wiedergegebenen, zugeklappten Stellung verschließt die Abdeckung 3 den Behälter 2 gänzlich, während sie in ihrer nicht gezeigten Öffnungsstellung einen großen Öffnungsquerschnitt des Behälteroberteils 1 freigibt, um den Behälter 2 mit Verteilgut befüllen, ihn reinigen zu können etc.

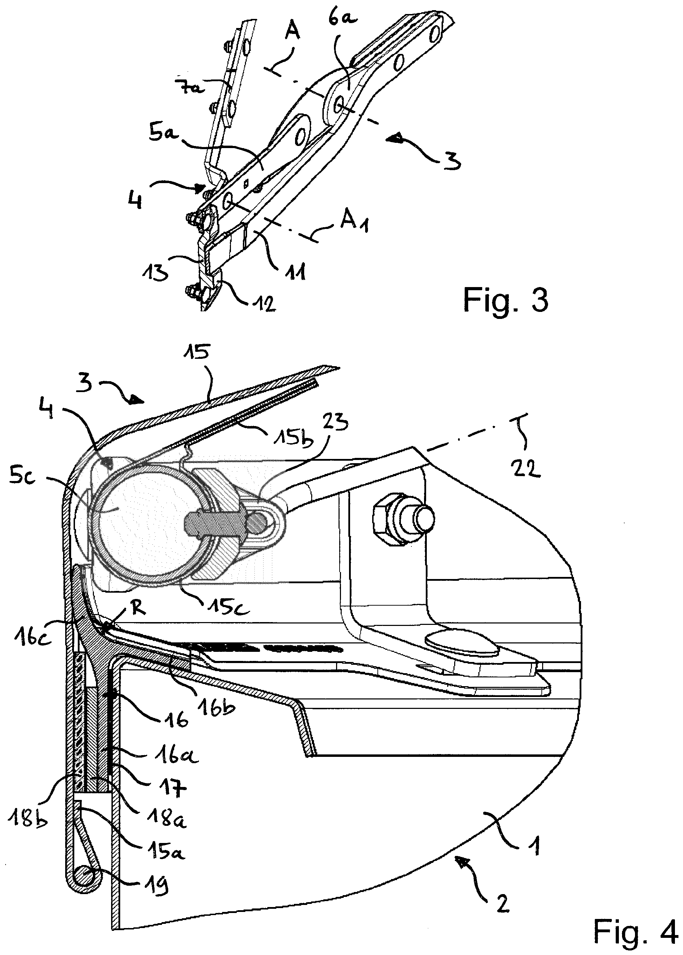

Die Abdeckung 3 umfasst ein Traggestänge 4 mit einer hieran festgelegten, nachgiebigen Abdeckplane, z.B. aus einem flexiblen, feuchtigkeitsdichten Kunststoffmaterial, welche in der Fig. 1 nicht zeichnerisch dargestellt und weiter unten unter Bezugnahme auf die Fig. 4 bis 8 im Einzelnen beschrieben ist. Das Traggestänge 4 weist im vorliegenden Fall einerseits einen stationär auf dem Behälteroberteil 1 montierten, etwa U-förmigen ersten Bügelträger 5 auf, welcher sich mit je einem ersten U-Schenkel 5a, 5b, welche z.B. von Flacheisenprofilen gebildet sind, von der Achse A fort parallel zu den entgegengesetzten Querseiten des Behälteroberteils 1 sowie zu dessen abgeschrägten Ecken erstreckt, während sein die ersten U-Schenkel 5a, 5b miteinander verbindender erster U-Steg eine erste Tragstrebe 5c des Traggestänges 4 bildet, welche z.B. einen Rohrabschnitt mit einem etwa runden Querschnitt besitzt und sich parallel zu der in Fig. 1 linken Längsseite des Behälteroberteils 1 erstreckt. Bei letzterer handelt es sich um die der Fahrtrichtung F der Verteilmaschine zugewandte Längsseite des Behälters 2. Das Traggestänge 4 weist anderseits einen ebenfalls im Wesentlichen U-förmigen, um die Achse A schwenkbaren zweiten Bügelträger 6 auf, welcher sich in der in der Fig. 1 wiedergegebenen Schließstellung mit je einem zweiten U-Schenkel 6a, 6b, welche z.B. von Flacheisenprofilen gebildet sind, gleichfalls von der Achse A fort parallel zu den entgegengesetzten Querseiten des Behälteroberteils 1 sowie zu dessen abgeschrägten Ecken erstreckt, während sein die zweiten U-Schenkel 6a, 6b miteinander verbindender zweiter U-Steg eine zweite Tragstrebe 6c des Traggestänges 4 bildet, welche z.B. einen Rohrabschnitt mit einem etwa runden Querschnitt besitzt und sich parallel zu der in Fig. 1 rechten Längsseite des Behälteroberteils 1 erstreckt und auf dessen oberer Stirnseite zur Anlage kommt, wenn die Abdeckung 3 zugeklappt ist. Bei der in Fig. 1 rechten Längsseite des Behälters handelt es sich um dessen der Fahrtrichtung F der Verteilmaschine abgewandte Längsseite. Der erste Bügelträger 5 ist dabei im Wesentlichen achssymmetrisch zu dem schwenkbaren zweiten Bügelträger 6 oder unter einem demgegenüber geringen Querversatz stationär auf dem Behälteroberteil 1 montiert.

In der Öffnungsstellung (nicht gezeigt) gelangt der schwenkbare zweite Bügelträger 6 der Abdeckung 3 z.B. an dem stationären ersten Bügelträger 5 zur Anlage, um einen möglichst großen Querschnitt des Behälters 2 von oben her freizugeben. Wie insbesondere auch aus der Fig. 2 ersichtlich, ist an jedem U-Schenkel 5a, 5b; 6a, 6b der beiden U-förmigen Bügelträger 5, 6 an einem einander zugewandten Abschnitt derselben je eine um eine horizontale, zur Schwenkachse A parallele Achse A₁, A₂ schwenkbare Strebe 7a, 7b; 8a, 8b angelenkt, deren Länge in der geschlossenen Stellung der Abdeckung 3, in welcher der stationäre erste Bügelträger 5 und der schwenkbare zweite Bügelträger 6 im Wesentlichen in ein und derselben Horizontalebene angeordnet sind, größer ist als der Abstand der Achsen A₁ und A₂, wobei die Streben 7a, 7b; 8a, 8b ferner im Bereich ihres der jeweiligen Achse A₁, A₂ fernen Endes mittels eines Gelenks 9 aneinander angelenkt sind. Folglich bilden die jeweils beiden Streben 7a, 8a und 7b, 8b mit den Bügelträgern 5, 6 in der geschlossenen Stellung des Traggestänges 4 der Abdeckung 3 im Wesentlichen ein Dreieck, während sie in der geöffneten Stellung (nicht gezeigt), wenn der um die Schwenkachse A schwenkbare zweite Bügelträger 6 in Richtung des Pfeils P um die Achse A verschwenkt worden ist und an dem stationären ersten Bügelträger 5 zur Anlage gelangt, im Wesentlichen parallel zu den U-Schenkeln 5a, 5b; 6a, 6b der Bügelträger 5, 6 angeordnet sind. Im Bereich des der Achse A₁ und/oder A₂ fernen Endes zumindest einer der Streben 7a, 7b; 8a, 8b ist eine sich parallel zu den U-Stegen bzw. parallel zu der ersten Tragstrebe 5c und zu der zweiten Tragstrebe 6c der Bügelträger 5, 6 erstreckende dritte Tragstrebe 10 montiert, welche in der geschlossenen Stellung der Abdeckung 3 (Fig. 1) folglich zwischen der ersten Tragstrebe 5c und der zweiten Tragstrebe 6c der Bügelträger 5, 6 des Traggestänges 4 und auf einem demgegenüber höheren Niveau angeordnet ist. Die in der Fig. 1 nicht zeichnerisch wiedergegebene Abdeckplane (siehe hierzu die Fig. 4 bis 8) erstreckt sich hierbei in der den Querschnitt des Behälters 2 abdeckenden, zugeklappten Stellung entsprechend der Fig. 1 über die zentrale dritte Tragstrebe 10 des Traggestänges 4 hinweg und spannt sich folglich sowohl über die erste (stationäre) Tragstrebe 5c und über die zweite (schwenkbare) Tragstrebe 6c als auch über die dritte Tragstrebe 10, so dass sie in der geschlossenen Stellung der Abdeckung eine etwa dachförmige Erstreckung besitzt, um insbesondere Niederschlagswasser abfließen zu lassen.

Während die Abdeckung 3 zwischen ihrer zugeklappten Stellung (Fig. 1) und ihrer aufgeklappten Stellung (nicht gezeigt) grundsätzlich auch motorisch und vorzugsweise fernbedienbar betätigt sein kann, wie beispielsweise mittels einer elektromotorischen Antriebseinheit gemäß der eingangs zitierten DE 20 2013 009 703 U1, ist sie bei dem zeichnerisch dargestellten Ausführungsbeispiel manuell betätigbar. Wie sich insbesondere aus den Fig. 2 und 3 ergibt, weist das Traggestänge 4 der Abdeckung 3 - oder genauer: der schwenkbare zweite Bügelträger 6 des Traggestänges 4 - zu diesem Zweck einen Hebel 11 auf, welcher im vorliegenden Fall exzentrisch zur Schwenkachse A des schwenkbaren zweiten Bügelträgers 6 an zumindest einem 6a seiner U-Schenkel 6a, 6b festgelegt, beispielsweise verschraubt, ist und sich von dem U-Schenkel 6a bis jenseits der Schwenkachse A erstreckt. Auf diese Weise kann die Abdeckung 4 in einfacher Weise geöffnet werden, indem der an dem schwenkbaren zweiten Bügelträger 6 des Traggestänges 4 der Abdeckung 3 festgelegte Hebel 11 manuell nach unten gedrückt wird, woraufhin der schwenkbare zweite Bügelträger 6 um die Schwenkachse A nach oben geklappt wird.

Um den schwenkbaren zweiten Bügelträger 6 des Traggestänges 4 der Abdeckung 3 zu arretieren und auf diese Weise ein unbeabsichtigtes, teilweises Öffnen der Abdeckung im Falle von Wind und/oder Vibrationen zu verhindern, ist der Hebel 11 im vorliegenden Fall arretierbar. Dies geschieht beispielsweise mittels eines an dem Behälteroberteil 1 und/oder an dem stationären ersten Bügelträger 5 festgelegten Einrastelementes 12, welches sich im Wesentlichen senkrecht zu dem in der Arretierstellung befindlichen und z.B. von einem Flacheisenprofil gebildeten Hebel 11 (vgl. die Fig. 2 und 3) erstreckt und in seinem zentralen, von dem Hebel 11 übergriffenen Abschnitt eine Aussparung 13 besitzt (vgl. insbesondere die Schnittansicht der Fig. 3), welche den in der Arretierstellung befindlichen Hebel 11 im Wesentlichen formschlüssig aufnimmt. Soll die Abdeckung 3 geöffnet werden, muss der Hebel 11 folglich zunächst von dem Behälter 1 fort nach vorne gezogen werden, um ihn außer Eingriff mit der Aussparung 13 des Einrastelementes 12 zu bringen, woraufhin er in der oben erläuterten Weise nach unten gedrückt wird, um die Abdeckung 3 aufzuklappen. Bei dem zeichnerisch wiedergegebenen Ausführungsbeispiel ist der Hebel 11 im Übrigen an seinem freien, dem schwenkbaren zweiten Bügelträger 6 abgewandten Ende ferner mit einer Handhabe 14 ausgestattet.

In den Fig. 4 bis 6 ist die dichte, aber gleichwohl lösbare Befestigung der in den Fig. 1 bis 3 nicht gezeigten Abdeckplane 15 der Abdeckung 3 an der in Fahrtrichtung F vorderen (in Fig. 1 linken) Längsseite des Behälters 2 dargestellt, wobei eine entsprechende Befestigung der Abdeckplane 15 insbesondere auch sowohl im Bereich der abgeschrägten Ecken des Behälters 2 als auch an den beiden, dieser vorderen Längsseite des Behälters 2 zugewandten Abschnitten der an diese angrenzenden Querseiten des Behälters 2 vorgesehen sein kann, so dass die Abdeckplane 15 im Wesentlichen entlang des gesamten stationären ersten Bügelträgers 5 des Traggestänges 4 der Abdeckung 3 in der nachfolgend beschriebenen Weise an dem Behälter 2 festgelegt ist.

Zu dieser im Wesentlichen staub- und feuchtigkeitsdichten, aber gleichwohl lösbaren und einfache montier- bzw. demontierbaren Befestigung der Abdeckplane 15 der Abdeckung 3 im oberen Randbereich des Behälters 2 ist eine Dichtungsleiste 16 vorgesehen, welche beim vorliegenden Ausführungsbeispiel fest an dem Behälter 2 angeordnet ist, während die Abdeckplane 15 lösbar an der Dichtungsleiste 16 befestigbar ist. Wie bereits erwähnt, kann die Dichtungsleiste 16 indes auch lösbar an dem Behälter 2 festgelegt sein (nicht gezeigt) und kann in diesem Fall auch eine feste Verbindung zwischen der Dichtungsleiste 16 und der Abdeckplane 15 vorgesehen sein (ebenfalls nicht gezeigt).

Der Querschnitt der Dichtungsleiste 16 weist beim vorliegenden Ausführungsbeispiel einen ersten Schenkel 16a, einen zweiten Schenkel 16b und einen dritten Schenkel 16c auf. Der erste Schenkel 16a der Dichtungsleiste 16 erstreckt sich parallel zur Außenseite des oberen Randbereichs des Behälters 2 und ist an seiner inneren, dem Behälter 2 zugewandten Seite an diesem festgelegt, während seine äußere, dem Behälter 2 abgewandte Seite zur lösbaren Befestigung der Abdeckplane 15 dient. Der zweite Schenkel 16b der Dichtungsleiste 16 erstreckt sich vom oberen Ende des ersten Schenkels 16a fort in Richtung des Inneren des Behälters 2 und übergreift dessen obere Stirnseite, so dass sich die Dichtungsleiste 16 mittels des zweiten Schenkels 16a auf der oberen Stirnseite des Behälters 2 abzustützen vermag und eine hohe Stabilität sichergestellt ist. Die genaue Geometrie der im vorliegenden Fall sich im Wesentlichen linear erstreckenden ersten 16a und zweiten Schenkel 16b der Dichtungsleiste 16 ist dabei zweckmäßigerweise an die Geometrie des oberen Randbereiches des Behälters 2 angepasst, um dort vorzugsweise vornehmlich vollflächig zur Anlage zu gelangen. Entsprechendes gilt für den zwischen dem ersten 16a und zweiten Schenkel 16b der Dichtungsleiste 16 gebildeten Winkel. Der dritte Schenkel 16c der Dichtungsleiste 16 erstreckt sich von dem Verbindungsbereich des ersten 16a mit dem zweiten Schenkel 16b fort nach oben, so dass der dritte Schenkel 16c von der oberen Stirnseite des Behälters 2 nach oben vorsteht. Im vorliegenden Fall erstreckt sich der dritte Schenkel 16c der Dichtungsleiste 16 dabei im Wesentlichen schräg sowohl nach oben als auch geringfügig nach außen von dem Behälter 2 fort, wobei zwischen dem zweiten Schenkel 16b und dem dritten Schenkel 16c der Dichtungsleiste 16 ein gegenüber der Dicke der Dichtungsleiste 16 großer Radius R gebildet ist. Auf diese Weise wird von der Innenseite des Behälters 2 gegen den dritten Schenkel 16c der Dichtungsleiste 16, z.B. anlässlich eines Bremsvorgangs der Verteilmaschine, auftreffendes Verteilgut an der Innenseite des dritten Schenkels 16c zurückgehalten und von diesem abgebremst und in den Behälter 2 zurück geleitet, ohne dass Verteilgutpartikel auf der Dichtungsleiste 16 liegen bleiben.

Während der erste Schenkel 16a der Dichtungsleiste 16 grundsätzlich in beliebiger bekannter Weise an dem Behälter 2 festgelegt sein kann, so lange die geforderte Abdichtung sichergestellt ist, erfolgt dies bei dem zeichnerisch wiedergegebenen Ausführungsbeispiel mittels eines beidseitig klebenden Klebebandes 17, dessen Breite im vorliegenden Fall im Wesentlichen der Länge des ersten Schenkels 16a der Dichtungsleiste 16 entspricht oder demgegenüber nur geringfügig kleiner ist. Alternativ oder zusätzlich kann in entsprechender Weise auch der zweite Schenkel 16b der Dichtungsleiste 16 an der oberen Stirnseite des Behälters 2 festgelegt sein (nicht gezeigt). Die lösbare, aber gleichwohl dichte Befestigung der Abdeckplane 15 an dem ersten Schenkel 16a der Dichtungsleiste 16 erfolgt im vorliegenden Fall mittels eines Klettverschlusses 18a, 18b, dessen Hakenseite 18a (oder dessen Flauschseite) auf die Außenseite des ersten Schenkels 16a der Dichtungsleiste 16 aufgebracht, z.B. gleichfalls aufgeklebt, ist, während seine Flauschseite 18b (oder seine Hakenseite) auf den innenseitigen Randbereich der Abdeckplane 15 aufgebracht, z.B. ebenfalls aufgeklebt, ist. Die auf den ersten Schenkel 16a der Dichtungsleiste 16 aufgebrachte Hakenseite 18a des Klettverschlusses erstreckt sich wiederum vorzugsweise etwa über die gesamte Länge des ersten Schenkels 16a hinweg, während sich die auf die Abdeckplane 15 aufgebrachte Flauschseite 18b des Klettverschlusses zweckmäßigerweise um einen demgegenüber breiteren Abschnitt ihres inneren Randbereiches erstreckt, um die Abdeckplane 15 spannen können und etwaige Längenänderungen der Abdeckplane, z.B. infolge von Temperaturunterschieden, ausgleichen zu können.

Wie des Weiteren den Fig. 4 bis 6 zu entnehmen ist, kann die Abdeckplane 15 ferner mit ihrem freien Ende den ersten Schenkel 16a der Dichtungsleiste 16 nach unten übergreifen, so dass letztere vollständig von der Abdeckplane 15 bedeckt ist und ein Eindringen von Schmutz und Feuchtigkeit in Richtung des Klettverschlusses 18a, 18b vermieden wird. Bei dem zeichnerisch wiedergegebenen Ausführungsbeispiel ist ferner der den ersten Schenkel 16a der Dichtungsleiste 16 nach unten übergreifende Abschnitt der Abdeckplane 15 unter Bildung von wenigstens zwei Lagen, beispielsweise mittels Vernähen der endseitigen Kante 15a der Abdeckplane 15 mit einem hiervon beanstandeten Bereich derselben, nach innen und oben umgefaltet, wobei zwischen den beiden Lagen der Abdeckplane 15 eine sich im Wesentlichen parallel zu der Dichtungsleiste 16 erstreckende Griffstange 19 eingebracht ist, welche die Abdeckplane 15 endständig im Wesentlichen faltenfrei stabilisiert und deren manuelles Ergreifen, z.B. anlässlich ihrer Montage bzw. Demontage, erleichtert.

Um die Abdeckplane 15 optimal spannen zu können, kann sie vorteilhafterweise zusätzlich zu ihrer vorbeschriebenen lösbaren Befestigung ihres Endbereiches an der Dichtungsleiste 16 auch an dem stationären ersten Bügelträger 5 des Traggestänges 4 festgelegt sein. In diesem Zusammenhang ist in den Fig. 4 bis 6 erkennbar, dass eine innere Lage 15b der Abdeckplane 15 ferner an der sich im Wesentlichen parallel zu der Dichtungsleiste 16 und oberhalb derselben erstreckenden ersten Tragstrebe 5c, also an dem U-Steg des stationären ersten Bügelträgers 5, des Traggestänges 4 festgelegt ist, wobei - wie bereits erwähnt - eine entsprechende zusätzliche Befestigung der Abdeckplane 15 insbesondere auch an den U-Schenkeln 5a, 5b des stationären ersten Bügelträgers 5 vorgesehen sein kann (nicht gezeigt). Die erste Tragstrebe 5c des ersten Bügelträgers 5 des Traggestänges 4 ist dabei in einer endseitigen Schlaufe 15c der inneren Lage 15b der Abdeckplane 15 aufgenommen, welche wiederum z.B. durch entsprechendes Vernähen des endständigen Abschnittes der inneren Lage 15b der Abdeckplane 15 gebildet sein kann.

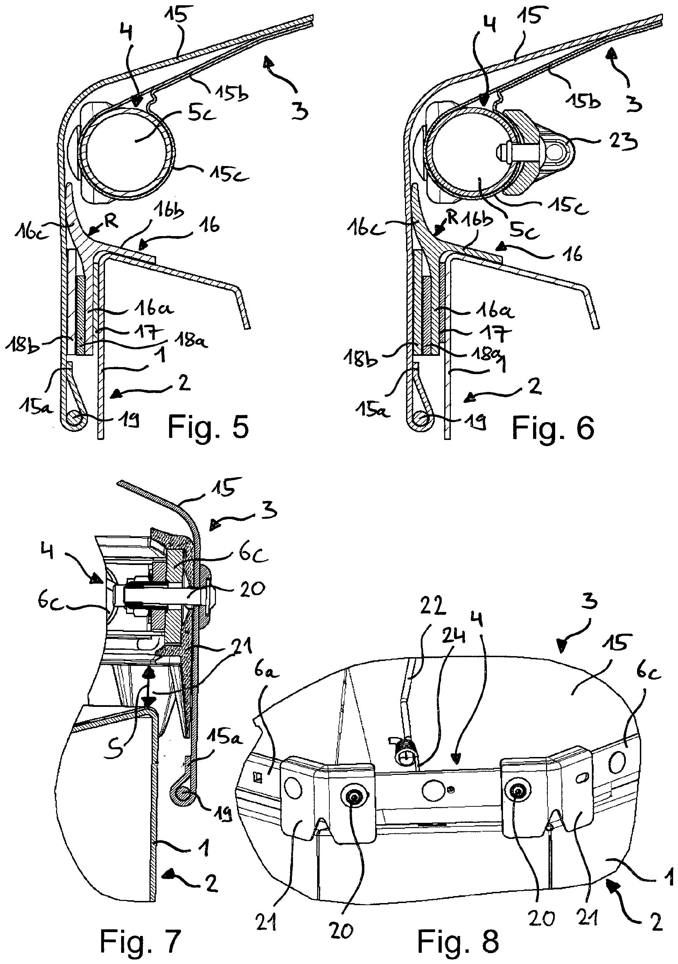

In den Fig. 7 und 8 ist die Befestigung der in den Fig. 1 bis 3 nicht gezeigten Abdeckplane 15 der Abdeckung 3 an dem Traggestänge 4 im Bereich der in Fahrtrichtung F hinteren (in Fig. 1 rechten) Längsseite des Behälters 2 dargestellt, wobei eine entsprechende Befestigung der Abdeckplane 15 insbesondere auch sowohl im Bereich der abgeschrägten Ecken des Behälters 2 als auch an den beiden, dieser hinteren Längsseite des Behälters 2 zugewandten Abschnitten der an diese angrenzenden Querseiten des Behälters 2 vorgesehen sein kann, so dass die Abdeckplane 15 im Wesentlichen entlang des gesamten schwenkbaren zweiten Bügelträgers 6 des Traggestänges 4 in der nachfolgend beschriebenen Weise an diesem festgelegt ist.

Wie insbesondere in der Fig. 7 erkennbar, ist die Abdeckplane 15 hierbei an der der Dichtungsleiste 16 (vgl. die Fig. 4 bis 6) entgegengesetzten Seite des Behälters 2 an dem in Fahrtrichtung F hinteren, um die Schwenkachse A schwenkbaren und sich oberhalb des Behälters 2 erstreckenden zweiten Bügelträger 6 des Traggestänges 4 festgelegt, wobei die Fig. 7 die Befestigung der Abdeckplane 15 an dem parallel zur hinteren Längsseite des Behälters 2 angeordneten U-Steg dieses zweiten Bügelträgers 6, also an der von diesem gebildeten zweiten Tragstrebe 6c, zeigt, eine entsprechende Befestigung der Abdeckplane 15 aber - wie bereits erwähnt - auch an den in parallel zu den Querseiten des Behälters 2 angeordneten U-Schenkeln 6a, 6b des schwenkbaren zweiten Bügelträgers 6 vorgesehen sein kann. Die Abdeckplane 15 ist beispielsweise mittels einer Mehrzahl an Schrauben 20 oder Bolzen an der zweiten Tragstrebe 6c des schwenkbaren zweiten Bügelträgers 6 festgelegt. Die Befestigung der Abdeckplane 15 erfolgt dabei zweckmäßigerweise derart, dass sie in ihrer den Querschnitt des Behälters 2 abdeckenden, zugeklappten Stellung sowohl die zweite Tragstrebe 6c des schwenkbaren zweiten Bügelträgers 6 als auch insbesondere den unterhalb derselben angeordneten, oberen Randbereich des Behälters 2 nach unten, um ein Eindringen von Schmutz und Feuchtigkeit in den Behälter 2 zu minimieren. Darüber hinaus kann auch hier vorgesehen sein, dass der den oberen Randbereich des Behälters 2 nach unten übergreifende Abschnitt der Abdeckplane 15 unter Bildung von wenigstens zwei Lagen, beispielsweise mittels Vernähen der endseitigen Kante 15a der Abdeckplane 15 mit einem hiervon beanstandeten Bereich derselben, nach innen und oben umgefaltet ist, wobei zwischen den beiden Lagen der Abdeckplane 15 eine Griffstange 19 eingebracht ist, welche die Abdeckplane 15 endständig im Wesentlichen faltenfrei stabilisiert und deren manuelles Ergreifen, z.B. anlässlich ihrer Montage bzw. Demontage, erleichtert.

Wie aus den Fig. 7 und 8 weiterhin ersichtlich, ist die Abdeckplane 15 an der der Dichtungsleiste 16 entgegengesetzten bzw. an der dem schwenkbaren zweiten Bügelträger 6 des Traggestänges 4 zugewandten Seite des Behälters 2 mit einer Mehrzahl an Abstandhaltern 21 ausgestattet, welche unter Freihaltung eines zwischen der oberen Stirnseite des Behälters 2 und dem die Abdeckplane 15 tragenden schwenkbaren zweiten Bügelträgers 6 des Traggestänges 4 gebildeten Spaltes S (vgl. die Fig. 7) zum Abstützen der Abdeckplane 15 bzw. des sie tragenden schwenkbaren zweiten Bügelträgers 6 des Traggestänges 4 auf dem oberen Randbereich des Behälters 2 dienen. Die Abstandhalter 21, welche vorzugsweise aus Elastomermaterialien, wie Gummi, Silikon oder dergleichen, gefertigt sein können, sind im vorliegenden Fall im Bereich der äußeren Kanten des Behälters 2 bzw. an den diesen folgenden Winkeln des schwenkbaren zweiten Bügelträgers 6 zwischen dessen U-Schenkeln 6a, 6b und seiner von dem U-Steg gebildeten zweiten Tragstrebe 6c angeordnet. Ihre Höhe ist dabei derart bemessen, dass der gebildete Spalt S jedenfalls größer ist als ein menschlicher Finger oder vorzugsweise als eine menschliche Hand, um für einen zuverlässigen Einklemmschutz zu sorgen. Darüber hinaus ist vorteilhafterweise zwischen der Außenseite des oberen Randbereiches des Behälters 2 und der gemeinsam mit den Abstandhaltern 21 an der zweiten Tragstrebe 6c des Traggestänges 4 festgelegten Abdeckplane 15 ein weiterer Spalt bzw. Freiraum gebildet, um zu verhindern, dass während des Zuklappens der Abdeckung 3 Teile der Abdeckplane 15 zwischen den Abstandhaltern 21 und der oberen Stirnseite des Behälters 2 eingeklemmt werden können. Zur Befestigung der Abstandhalter 21 sind letztere beispielsweise zwischen die Abdeckplane 15 und den schwenkbaren zweiten Bügelträger 6 eingebracht, so dass die entsprechenden Schrauben 20 oder Bolzen zur gemeinsamen Befestigung der Abdeckplane 15 mit den Abstandhaltern 21 an dem Traggestänge 4 der Abdeckung 3 dienen können.

Es sei an dieser Stelle allerdings darauf hingewiesen, dass zum Zwecke einer einwandfreie Abdichtung im Bereich der in Fahrtrichtung F hinteren Seite des Behälters 2 insbesondere dann, wenn die Abdeckung 3 motorisch betätigt ist und die Gefahr eines Einklemmens von Gliedmaßen des Benutzers folglich praktisch nicht besteht (vgl. hierzu beispielsweise die DE 20 2013 009 703 U1), auch andersartige Ausgestaltungen der Abdeckung 3 denkbar sind, wobei z.B. an der oberen Stirnseite des Behälteroberteils 1 ein zu dem schwenkbaren Bügelträger 6 des Traggestänges 4 im Wesentlichen komplementäres Dichtungsprofil montiert sein kann (nicht gezeigt), gegen welches der Bügelträger 6 in der zugeklappten Stellung der Abdeckung 3 dichtend anliegt.

Wie am besten in der Fig. 1 erkennbar ist, ist bei dem dargestellten Ausführungsbeispiel vorgesehen, dass sowohl zwischen der ersten Tragstrebe 5c des stationären ersten Bügelträgers 5 und der dritten Tragstrebe 10 als auch zwischen der zweiten Tragstrebe 6c des schwenkbaren zweiten Bügelträgers 6 und der dritten Tragstrebe 10 Bänder 22 gespannt sind, welche z.B. aus elastischen Materialien gebildet sein können und zur Abstützung der Abdeckplane 15 dienen, damit sich diese auch unter Wasser- oder Schneelast nicht nach unten durchbiegt und stets gespannt bleibt, so dass Niederschlagswasser abfließen kann. Eine weitere wichtige Aufgabe der Bänder 22 besteht darin, die Abdeckplane 15 im aufgeklappten Zustand der Abdeckung 3 derart zusammengefaltet und kompakt zu halten, dass gefaltete Abschnitte der Abdeckplane 15 nicht in den offenen Behälter 2 hineinfallen können. Dies geschieht dadurch, dass sich die Bänder 22 entlang der imaginären Ebenen erstrecken, welche durch die erste Tragstrebe 5c und die dritte Tragstrebe 10 bzw. durch die zweite Tragstrebe 6c und die dritte Tragstrebe 10 aufgespannt sind, so dass die Abdeckplane 15 durch die Bänder 22 vor einem Durchdringen dieser Ebenen im Wesentlichen gehindert ist, wenn die Abdeckung 3 aufgeklappt worden ist und die Abdeckplane 15 folglich nicht mehr gespannt ist, sondern ohne Vorhandenseins der Bänder 22 nach unten durchhängen könnte. Zur Befestigung der Bänder 22 können an der ersten Tragstrebe 5c und an der zweiten Tragstrebe 6c z.B. Halteösen 23 angeordnet sein (vgl. die Fig. 4 und 6), an welchen die Bänder 22 gespannt sind, indem die Bänder 22 entweder durch die Halteösen 23 hindurchgeführt (vgl. die Fig. 4) oder - insbesondere an den Enden eines jeweiligen Bandes 22 - mittels hieran festgelegter Haken 24 (vgl. die Fig. 8) befestigt sind. Die Befestigung der Bänder 22 an der dritten Tragstrebe 10 kann in entsprechender Weise erfolgen, wobei die dritte Tragstrebe 10 im vorliegenden Fall jedoch zwei Hülsen 25 (vgl. die Fig. 1) mit Spiel durchgreift, durch welche die Bänder 22 jeweils hindurchgeführt sind.

## Patentansprüche

1. Verteilmaschine, insbesondere Streu- und/oder Sämaschine, mit wenigstens einem von einem Tragrahmen getragenen Behälter (2) zur Aufnahme von pulver- und/oder partikelförmigem Verteilgut, wenigstens einer am Boden des Behälters (2) angeordneten Auslauföffnung, einem der Auslauföffnung nachgeordneten Dosierorgan sowie einem dem Dosierorgan nachgeordneten Verteilorgan zum Verteilen des pulver- und/oder partikelförmigen Verteilgutes auf oder in dem Boden, wobei der Behälter (2) eine um eine Schwenkachse (A) auf- und zu klappbare Abdeckung (3) aufweist, welche ein Traggestänge (4) mit einer hieran festgelegten, nachgiebigen Abdeckplane (15) umfasst, und welche in ihrer zugeklappten Stellung den Öffnungsquerschnitt des Behälters (2) abdeckt und in ihrer aufgeklappten Stellung zumindest einen Teil des Öffnungsquerschnittes des Behälters (2) freigibt, **dadurch gekennzeichnet, dass** die Abdeckplane (15) an zumindest einer Seite des Behälters (2) mittels wenigstens einer Dichtungsleiste (16) im oberen Randbereich des Behälters (2) lösbar befestigt ist, wobei der Querschnitt der Dichtungsleiste (16)
- einen ersten Schenkel (16a), welcher sich im Wesentlichen parallel zur Außenseite des Behälters (2) erstreckt, dessen innere Seite an der Außenseite des Behälters (2) anliegt und an dessen äußeren Seite die Abdeckplane (15) befestigt ist, und
- einen zweiten Schenkel (16b), welcher die obere Stirnseite des Behälters (2) übergreift und sich in Richtung des Inneren des Behälters (2) erstreckt, und/oder einen dritten Schenkel (16c), welcher sich von dem Behälter (2) fort nach oben erstreckt, aufweist.

2. Verteilmaschine nach Anspruch 1, **dadurch gekennzeichnet, dass** die Abdeckplane (15) zumindest an der - in Fahrtrichtung (F) betrachtet - vorderen Seite des Behälters (2), insbesondere an der vorderen Längsseite des Behälters (2), mittels der Dichtungsleiste (16) im oberen Randbereich des Behälters (2) lösbar befestigt ist.

3. Verteilmaschine nach Anspruch 1 oder 2, **dadurch gekennzeichnet, dass**
- die Dichtungsleiste (16) im oberen Randbereich der zumindest einen Seite des Behälters (2) festgelegt ist, wobei die Abdeckplane (15) lösbar an der Dichtungsleiste (16) befestigt ist; oder
- die Dichtungsleiste (16) im Randbereich der Abdeckplane (15) festgelegt ist, wobei die Dichtungsleiste (16) mit der Abdeckplane (15) lösbar im oberen Randbereich des Behälters (2) befestigt ist.

4. Verteilmaschine nach einem der Ansprüche 1 bis 3, **dadurch gekennzeichnet, dass**
- die Abdeckplane (15) mittels eines Klettverschlusses (18a, 18b) oder eines Reißverschlusses an der an dem Behälter (2) festgelegten Dichtungsleiste (16) lösbar befestigt ist; oder
- die Dichtungsleiste (16) mit der hieran festgelegten Abdeckplane (15) mittels eines Klettverschlusses oder eines Reißverschlusses lösbar an dem Behälter (2) befestigt ist.

5. Verteilmaschine nach einem der Ansprüche 1 bis 4, **dadurch gekennzeichnet, dass** der erste Schenkel (16a) der Dichtungsleiste (16) an der Außenseite des Behälters (2), insbesondere mittels eines beidseitig klebenden Klebebandes (17), lösbar festgelegt ist.

6. Verteilmaschine nach einem der Ansprüche 1 bis 5, **dadurch gekennzeichnet, dass** die Abdeckplane (15) die Dichtungsleiste (16) nach unten übergreift.

7. Verteilmaschine nach Anspruch 6, **dadurch gekennzeichnet, dass** der die Dichtungsleiste (16) nach unten übergreifende Abschnitt der Abdeckplane (15) unter Bildung von wenigstens zwei Lagen umgefaltet ist, wobei zwischen den beiden Lagen der Abdeckplane (15) insbesondere eine sich im Wesentlichen parallel zu der Dichtungsleiste (16) erstreckende Griffstange (19) eingebracht ist.

8. Verteilmaschine nach einem der Ansprüche 1 bis 7, **dadurch gekennzeichnet, dass** der zweite Schenkel (16b) der Dichtungsleiste (16) an der oberen Stirnseite des Behälters (2), insbesondere mittels eines beidseitig klebenden Klebebandes, lösbar festgelegt ist.

9. Verteilmaschine nach einem der Ansprüche 1 bis 8, **dadurch gekennzeichnet, dass** sich der dritte Schenkel (16c) der Dichtungsleiste (16) im Wesentlichen schräg sowohl nach oben als auch nach außen von dem Behälter (2) fort erstreckt, wobei insbesondere
- sich der dritte Schenkel (16c) der Dichtungsleiste (16) von dem Verbindungsbereich ihres ersten Schenkels (16a) mit dem zweiten Schenkel (16b) von dem Behälter (2) fort nach oben erstreckt; und/oder
- zwischen dem zweiten Schenkel (16b) und dem dritten Schenkel (16c) der Dichtungsleiste (16) ein gegenüber der maximalen Dicke der Dichtungsleiste (16) größerer Radius angeordnet ist.

10. Verteilmaschine nach einem der Ansprüche 1 bis 9, **dadurch gekennzeichnet, dass** eine innere Lage (15b) der Abdeckplane (15) zumindest an der einen Seite des Behälters (2) ferner an einer sich im Wesentlichen parallel zu der Dichtungsleiste (16) und oberhalb derselben erstreckenden ersten Tragstrebe (5c) des Traggestänges (4) festgelegt ist, wobei die erste Tragstrebe (5c) insbesondere in einer endseitigen Schlaufe (15c) der inneren Lage (15b) der Abdeckplane (15) aufgenommen ist.

11. Verteilmaschine nach einem der Ansprüche 1 bis 10, **dadurch gekennzeichnet, dass** die Abdeckplane (15) an wenigstens einer, der wenigstens einen Dichtungsleiste (16) entgegengesetzten Seite des Behälters (2) an einer sich im Wesentlichen parallel zu dieser Seite des Behälters (2) und oberhalb derselben erstreckenden zweiten Tragstrebe (6c) des Traggestänges (4) festgelegt ist, wobei die Abdeckplane (15) insbesondere
- mittels Schrauben (20) oder Bolzen an der zweiten Tragstrebe (6c) festgelegt ist; und/oder
- in ihrer den Querschnitt des Behälters (2) abdeckenden, zugeklappten Stellung sowohl die zweite Tragstrebe (6c) als auch den unterhalb derselben angeordneten, oberen Randbereich des Behälters (2) nach unten übergreift.

12. Verteilmaschine nach einem der Ansprüche 1 bis 11, **dadurch gekennzeichnet, dass** die Abdeckplane (15) an ihrer wenigstens einen, der wenigstens einen Dichtungsleiste (16) entgegengesetzten Seite des Behälters (2) mit einer Mehrzahl an Abstandhaltern (21) ausgestattet ist, welche unter Freihaltung eines zwischen der oberen Stirnseite des Behälters (2) und dem die Abdeckplane (15) tragenden Traggestänge (4) angeordneten Spaltes (S) zum Abstützen der Abdeckplane (15) auf dem oberen Randbereich des Behälters (2) dienen, wobei die Abstandhalter (21) insbesondere
- aus einem Elastomermaterial gefertigt und/oder hiermit beschichtet; und/oder
- zumindest im Bereich der äußeren Kanten des Behälters (2) angeordnet sind.

13. Verteilmaschine nach einem der Ansprüche 1 bis 12, **dadurch gekennzeichnet, dass** die Abdeckplane (15) in ihrer den Querschnitt des Behälters (2) abdeckenden, zugeklappten Stellung im Wesentlichen dachförmig ausgestaltet ist, indem sie über eine zentrale dritte Tragstrebe (10) des Traggestänges (4), welche sich im Wesentlichen parallel zu der Dichtungsleiste (16) und oberhalb derselben erstreckt, gespannt ist.

14. Verteilmaschine nach Anspruch 13, **dadurch gekennzeichnet, dass** zwischen der ersten Tragstrebe (5c) und der dritten Tragstrebe (10) und/oder zwischen der zweiten Tragstrebe (6c) und der dritten Tragstrebe (10) Bänder (22), insbesondere aus elastischen Materialien, gespannt sind, um die Abdeckplane (15) in der aufgeklappten Stellung der Abdeckung (3) kompakt zu halten und/oder um sie in der zugeklappten Stellung der Abdeckung (3) abzustützen, wobei insbesondere
- an der ersten Tragstrebe (5c) und/oder an der zweiten Tragstrebe (6c) Halteösen (23) angeordnet sind, an welchen die Bänder (22), insbesondere mittels hieran befestigter Haken (24), gespannt sind; und/oder
- die dritte Tragstrebe (10) wenigstens eine, insbesondere wenigstens zwei, Hülse(n) (25) durchgreift, durch welche die Bänder (22) hindurchgeführt sind.

15. Verteilmaschine nach einem der Ansprüche 1 bis 14, **dadurch gekennzeichnet, dass** das Traggestänge (4) der Abdeckung (3) mittels eines exzentrisch zu der Schwenkachse (A) an dem Traggestänge (4) angeordneten Hebels (11) manuell zwischen deren zugeklappten Stellung und deren aufgeklappten Stellung hin und her bewegbar ist, wobei der Hebel (11) insbesondere in der zugeklappten Stellung der Abdeckung (3) arretierbar ist.

## Claims

1. Distributing machine, in particular a spreading and/or sowing machine, having at least one container (2) which for receiving pulverulent and/or particulate distribution material is supported by a support frame, at least one outlet opening which is disposed on the base of the container (2), a metering member which is disposed downstream of the outlet opening, and a distributing member for distributing the pulverulent and/or particulate distribution material on or in the ground, wherein the container (2) has a cover (3) which is able to be folded open and shut about a pivot axis (A) and comprises a support linkage assembly (4) having a flexible tarpaulin (15) which is established on said support linkage assembly (4) and in the folded-shut position thereof covers the opening cross section of the container (2) and in the folded-open position thereof exposes at least part of the opening cross section of the container (2), **characterized in that** the tarpaulin (15) on at least one side of the container (2) is releasably fastened by means of at least one sealing strip (16) in the upper peripheral region of the container (2), wherein the cross section of the sealing strip (16) has
- a first leg (16a) which extends so as to be substantially parallel to the external side of the container (2), the inside of said first leg (16a) bearing on the external side of the container (2), and the tarpaulin (15) being fastened to the outside of said of said first leg (16a); and
- a second leg (16b) which engages across the upper end side of the container (2) and extends in the direction of the interior of the container (2), and/or a third leg (16c) which from the container (2) extends upwards.

2. Distributing machine according to Claim 1, **characterized in that** the tarpaulin (15), when viewed in the direction of travel (F), at least on the front side of the container (2), in particular on the front longitudinal side of the container (2), is releasably fastened by means of the sealing strip (16) in the upper peripheral region of the container (2).

3. Distributing machine according to Claim 1 or 2, **characterized in that**
- the sealing strip (16) is established in the upper peripheral region of the at least one side of the container (2), wherein the tarpaulin (15) is releasably fastened to the sealing strip (16); or
- the sealing strip (16) is established in the peripheral region of the tarpaulin (15), wherein the sealing strip (16), with the tarpaulin (15), is releasably fastened in the upper peripheral region of the container (2).

4. Distributing machine according to one of Claims 1 to 3, **characterized in that**
- the tarpaulin (15) is releasably fastened to the sealing strip (16) that is established on the container (2) by means of a hook-and-loop fastener (18a, 18b) or a zip fastener; or
- the sealing strip (16), with the tarpaulin (15) established thereon, is releasably fastened to the container (2) by means of a hook-and-loop fastener or a zip fastener.

5. Distributing machine according to one of Claims 1 to 4, **characterized in that** the first leg (16a) of the sealing strip (16) is releasably established, in particular by means of a double-sided adhesive tape (17), on the external side of the container (2) .

6. Distributing machine according to one of Claims 1 to 5, **characterized in that** the tarpaulin (15) engages towards the bottom across the sealing strip (16).

7. Distributing machine according to Claim 6, **characterized in that** the portion of the tarpaulin (15) that engages towards the bottom across the sealing strip (16) is folded while forming at least two tiers, wherein a handrail (19) which in particular extends so as to be substantially parallel to the sealing strip (16) is incorporated between the two tiers of the tarpaulin (15).

8. Distributing machine according to one of Claims 1 to 7, **characterized in that** the second leg (16b) of the sealing strip (16) is releasably established, in particular by means of a double-side adhesive tape, on the upper end side of the container (2).

9. Distributing machine according to one of Claims 1 to 8, **characterized in that** the third leg (16c) of the sealing strip (16) from the container (2) extends in an oblique manner upwards as well as towards the outside, wherein in particular
- the third leg (16c) of the sealing strip (16) from the container (2) extends upwards from the connecting region of the first leg (16a) of said sealing strip (16) to the second leg (16b); and/or
- a radius which is larger in comparison to the maximum thickness of the sealing strip (16) is disposed between the second leg (16b) and the third leg (16c) of the sealing strip (16).

10. Distributing machine according to one of Claims 1 to 9, **characterized in that** an inner tier (15b) of the tarpaulin (15) is established at least on the one side of the container (2), furthermore on a first support strut (5c) of the support linkage assembly (4) that extends so as to be substantially parallel to the sealing strip (16) and above said sealing strip (16), wherein the first support strut (5c) is in particular received in an end-proximal loop (15c) of the inner tier (15b) of the tarpaulin (15).

11. Distributing machine according to one of Claims 1 to 10, **characterized in that** the tarpaulin (15) on at least one side of the container (2) that is opposite the at least one sealing strip (16) is established on a second support strut (6c) of the support linkage assembly (4) that extends so as to be substantially parallel to this side of the container (2) and above said side, wherein the tarpaulin (15) in particular
- is established on the second support strut (6c) by means of screws (20) or bolts; and/or
- in the folded-shut position thereof that covers the cross section of the container (2) engages towards the bottom across the second support strut (6c) as well as the upper peripheral region of the container (2) that is disposed below said second support strut (6c).

12. Distributing machine according to one of Claims 1 to 11, **characterized in that** the tarpaulin (15) on the at least one side thereof of the container (2) that is opposite the at least one sealing strip (16) is equipped with a plurality of spacers (21) which while keeping vacant a gap (S) which is disposed between the upper end side of the container (2) and the support linkage assembly (4) that supports the tarpaulin (15) serve for supporting the tarpaulin (15) on the upper peripheral region of the container (2), wherein the spacers (21) in particular
- are made from an elastomer material and/or coated with the latter; and/or
- are disposed at least in the region of the outer edges of the container (2).

13. Distributing machine according to one of Claims 1 to 12, **characterized in that** the tarpaulin (15) in the folded-shut position thereof that covers the cross section of the container (2) is designed so as to be substantially roof-shaped **in that** said tarpaulin (15) is tensioned across a central third support strut (10) of the support linkage assembly (4) which extends so as to be substantially parallel to the sealing strip (16) and above said sealing strip (16).

14. Distributing machine according to Claim 13, **characterized in that** straps (22), in particular from elastic materials, are tensioned between the first support strut (5c) and the third support strut (10) and/or between the second support strut (6c) and the third support strut (10) so as to keep the tarpaulin (15) compact in the folded-open position of the cover (3) and/or so as to support said tarpaulin (15) in the folded-shut position of the cover (3), wherein in particular
- holding eyelets (23) on which the straps (22) are tensioned in particular by means of hooks (24) fastened thereto are disposed on the first support strut (5c) and/or on the second support strut (6c); and/or
- the third support strut (10) penetrates at least one, in particular at least two, sleeve (s) (25) through which the straps (22) are guided.

15. Distributing machine according to one of Claims 1 to 14, **characterized in that** the support linkage assembly (4) of the cover (3) by means of a lever (11) which is disposed on the support linkage assembly (4) so as to be eccentric to the pivot axis (A) is manually movable between the folded-shut position of said cover (3) and the folded-open position of said cover (3), wherein the lever (11) is able to be locked in particular in the folded-shut position of the cover (3).

## Revendications

1. Machine de distribution, notamment machine à semer et/ou à épandre, avec au moins un récipient (2) supporté par un châssis pour loger un produit à épandre sous forme de poudre et/ou de particules, avec au moins une ouverture d'évacuation disposée au niveau du fond du récipient (2), avec un organe de dosage placé en aval de l'ouverture d'évacuation ainsi qu'avec un organe de distribution placé en aval de l'organe de dosage pour distribuer le produit à épandre sous forme de poudre et/ou de particules sur ou dans le sol, le récipient (2) comportant un cache (3) pouvant être ouvert et rabattu autour d'un axe de pivotement (A) et comprenant une tige portante (4) avec une bâche de recouvrement (15) souple y étant fixée et recouvrant dans sa position rabattue la section transversale d'ouverture du récipient (2) et libérant dans sa position ouverte au moins une partie de la section transversale d'ouverture du récipient (2), **caractérisée en ce que** la bâche de recouvrement (15) est fixée de façon amovible au niveau d'au moins un côté du récipient (2) à l'aide d'au moins une baguette d'étanchéité (16) dans la zone de bordure supérieure du récipient (2), la section transversale de la baguette d'étanchéité (16) comprenant :
- une première branche (16a) s'étendant pour l'essentiel parallèlement au côté extérieur du récipient (2), le côté intérieur de ladite branche reposant contre le côté extérieur du récipient (2) et le côté extérieur de ladite branche servant à la fixation de la bâche de recouvrement (15) ; et
- une deuxième branche (16b) agrippant le côté supérieur avant du récipient (2) et s'étendant en direction de l'intérieur du récipient (2) et/ou comportant une troisième branche (16c) s'étendant vers le haut depuis le récipient (2).

2. Machine de distribution selon la revendication 1, **caractérisée en ce que** la bâche de recouvrement (15) est fixée de façon amovible au moins au niveau du côté avant - considéré dans la direction de conduite (F) - du récipient (2), notamment au niveau du côté longitudinal avant du récipient (2), à l'aide de la baguette d'étanchéité (16), dans la zone de bordure supérieure du récipient (2).

3. Machine de distribution selon la revendication 1 ou 2, **caractérisée en ce que**
- la baguette d'étanchéité (16) est fixée dans la zone de bordure supérieure de l'au moins un côté du récipient (2), la bâche de recouvrement (15) étant fixée de façon amovible à la baguette d'étanchéité (16) ; ou
- la baguette d'étanchéité (16) est fixée dans la zone de bordure de la bâche de recouvrement (15), la baguette d'étanchéité (16) étant fixée de façon amovible à la bâche de recouvrement (15) dans la zone de bordure supérieure du récipient (2).

4. Machine de distribution selon l'une quelconque des revendications 1 à 3, **caractérisée en ce que** :
- la bâche de recouvrement (15) est fixée de façon amovible à la baguette d'étanchéité (16) fixée au niveau du récipient (2) à l'aide d'une fermeture velcro (18a, 18b) ou d'une fermeture éclair ; ou
- la baguette d'étanchéité (16) est fixée de façon amovible à la bâche de recouvrement (15) y étant fixée à l'aide d'une fermeture velcro ou d'une fermeture éclair au niveau du récipient (2).

5. Machine de distribution selon l'une quelconque des revendications 1 à 4, **caractérisée en ce que** la première branche (16a) de la baguette d'étanchéité (16) est fixée de façon amovible au niveau du côté extérieur du récipient (2), notamment à l'aide d'un ruban de colle (17) collant des deux côtés.

6. Machine de distribution selon l'une quelconque des revendications 1 à 5, **caractérisée en ce que** la bâche de recouvrement (15) agrippe vers le bas la baguette d'étanchéité (16).

7. Machine de distribution selon la revendication 6, **caractérisée en ce que** la section de la bâche de recouvrement (15) agrippant vers le bas la baguette d'étanchéité (16) est pliée en formant au moins deux couches, une tige de préhension (19) s'étendant pour l'essentiel parallèlement à la baguette d'étanchéité (16) étant notamment amenée entre les deux couches de la bâche de recouvrement (15).

8. Machine de distribution selon l'une quelconque des revendications 1 à 7, **caractérisée en ce que** la deuxième branche (16b) de la baguette d'étanchéité (16) est fixée de façon amovible au niveau du côté supérieur avant du récipient (2), notamment à l'aide d'un ruban de colle collant des deux côtés.

9. Machine de distribution selon l'une quelconque des revendications 1 à 8, **caractérisée en ce que** la troisième branche (16c) de la baguette d'étanchéité (16) s'étend pour l'essentiel de façon oblique tant vers le haut que vers l'extérieur à partir du récipient (2), sachant que notamment :
- la troisième branche (16c) de la baguette d'étanchéité (16) s'étend vers le haut depuis la zone de liaison de sa première branche (16a) avec la deuxième branche (16b) partant du récipient (2) ; et/ou
- un rayon supérieur à l'épaisseur maximale de la baguette d'étanchéité (16) est disposé entre la deuxième branche (16b) et la troisième branche (16c) de la baguette d'étanchéité (16).

10. Machine de distribution selon l'une quelconque des revendications 1 à 9, **caractérisée en ce qu'**une couche intérieure (15b) de la bâche de recouvrement (15) est fixée au moins au niveau d'un côté du récipient (2), en outre au niveau d'un premier montant portant (5c) de la tige portante (4) s'étendant pour l'essentiel parallèlement à la baguette d'étanchéité (16) et au-dessus de celle-ci, le premier montant portant (5c) étant notamment logé dans une boucle (15c) de côté d'extrémité de la couche intérieure (15b) de la bâche de recouvrement (15).

11. Machine de distribution selon l'une quelconque des revendications 1 à 10, **caractérisée en ce que** la bâche de recouvrement (15) est fixée au niveau d'au moins un côté du récipient (2) opposé à l'au moins une baguette d'étanchéité (16), au niveau d'un deuxième montant portant (6c) de la tige portante (4) s'étendant pour l'essentiel parallèlement à ce côté du récipient (2) et s'étendant au-dessus de celui-ci, la bâche de recouvrement (15) étant notamment :
- fixée au deuxième montant portant (6c) à l'aide de vis (20) ou de boulons ; et/ou
- agrippant vers le bas, dans sa position rabattue recouvrant la zone de bordure supérieure du récipient (2), la section transversale du récipient (2), tant le deuxième montant portant (6c) que la zone de bordure supérieure, disposée au-dessus de celui-ci, du récipient (2).

12. Machine de distribution selon l'une quelconque des revendications 1 à 11, **caractérisée en ce que** la bâche de recouvrement (15) est équipée d'une pluralité d'entretoises (21) au niveau d'au moins un côté du récipient (2) opposé à l'au moins une baguette d'étanchéité (16), ces entretoises servant à maintenir une fente (S) disposée entre le côté supérieur avant du récipient (2) et la tige portante (4) supportant la bâche de recouvrement (15) pour soutenir la bâche de recouvrement (15) sur la zone de bordure supérieure du récipient (2), l'entretoise (21) étant notamment :
- fabriquée à partir d'un matériau élastomère et/ou revêtue de celui-ci ; et/ou
- disposée au moins dans la zone des arêtes extérieures du récipient (2).

13. Machine de distribution selon l'une quelconque des revendications 1 à 12, **caractérisée en ce que** la bâche de recouvrement (15) est configurée, dans sa position rabattue recouvrant la section transversale du récipient (2), pour l'essentiel en forme de toit **en ce qu'**elle est tendue au-dessus d'un troisième montant portant (10) central de la tige portante (4) s'étendant pour l'essentiel parallèlement à la baguette d'étanchéité (16) et au-dessus de celle-ci.

14. Machine de distribution selon la revendication 13, **caractérisée en ce que** des bandes (22), notamment en matières élastiques, sont tendues entre le premier montant portant (5c) et le troisième montant portant (10) et/ou entre le deuxième montant portant (6c) et le troisième montant portant (10), pour maintenir de façon compacte la bâche de recouvrement (15) dans la position ouverte du cache (3) et/ou pour la maintenir dans la position rabattue du cache (3), sachant que notamment :
- des oeillets de retenue (23) sont disposés au niveau du premier montant portant (5c) et/ou au niveau du deuxième montant portant (6c) les bandes (22) étant tendues au niveau desdits oeillets, notamment à l'aide de crochets (24) y étant rattachés ; et/ou
- le troisième montant portant (10) pénétrant au moins une douille (25), notamment au moins deux à travers lesquelles les bandes (22) sont introduites.

15. Machine de distribution selon l'une quelconque des revendications 1 à 14, **caractérisée en ce que** la tige portante (4) du cache (3) peut être déplacée manuellement selon un mouvement de va-et-vient à l'aide d'un levier (11) disposé de façon excentrée par rapport à l'axe de pivotement (A) au niveau de la tige portante (4), entre sa position rabattue et sa position ouverte, le levier (11) pouvant notamment être bloqué dans la position rabattue du cache (3).
